# EUROPEAN PATENT APPLICATION

(11) **EP 1 847 584 A2**
(43) Date of publication of application: **24.10.2007**
(21) Application number: 07103001.9
(22) Date of filing: 23.02.2007
(51) Int. Cl.: C10L 1/02, C10L 1/14, C09K 15/24, C11B 5/00, C09K 15/30

(54) **Improvements in Biofuel**

(30) Priority: 21.04.2006 EP 06112884
(71) Applicant: Infineum International Limited, Abingdon Oxfordshire OX13 6BB (GB)
(72) Inventor: Sutkowski, Andrew Czeslaw Infineum UK Ltd, Oxfordshire, OX13 6 BB (GB)
(74) Representative: Capaldi, Michael Joseph

(57) **Abstract**

The invention relates to a liquid composition comprising a major amount of an oil and a minor amount of an additive composition, wherein the additive composition comprises BHQ and N,N'- disalicylidene propylene diamine, and wherein at least 2% by weight of the oil is derived from a plant or animal material. The invention also relates to a method of preventing or retarding the oxidation of the liquid composition and the use of the additive to prevent or retard the oxidation of the liquid composition.

## Description

This invention relates to the prevention or retardation of the oxidation of oils derived from plant or animal materials.

Oils and fats derived from plant or animal materials are increasingly finding application as fuels and in particular, as partial or complete replacements for petroleum derived middle distillate fuels such as diesel. Commonly, such fuels are known as 'biofuels' or 'biodiesel'. Biofuels may be derived from many sources. Amongst the most common are the alkyl, often methyl, esters of fatty acids extracted from plants such as rapeseed, sunflower etc. These types of fuel are often referred to as FAME (fatty acid methyl esters).

There is an environmental drive to encourage the use of such fuels as they are obtained from a renewable source. There are also indications that biofuels produce less pollution on combustion than the equivalent petroleum-derived fuel.

However, as the fuels are derived from natural sources, they are prone to deterioration by oxidation when stored.

The problem of oxidation is less pronounced but still important for petroleum-derived fuels and the use of anti-oxidant additives for petroleum-derived oils is well known. The most common types of species used are aryl-aminic and phenolic anti-oxidants such as diphenylamine, dialkylphenylamine, BHT, BHQ, Irganox L118 and Irganox L57. Also used are ketonic, phosphorus based and sugar ester anti-oxidants such as 2,4 nonanedione, di-lauryl phosphite, tritolyl phosphate and ascorbyl palmitate. US2004/0139649 A1 describes the use of BHT (2,4,-di-tert-butylhydroxytoluene) to increase the storage stability of biodiesel.

Metal deactivators (MDA) are known to be used in fuels to passivate metallic surfaces and dissolved metals and prevent them from accelerating degradation.

The present invention is based on the discovery that the combination of a certain known anti-oxidant material, 2,5- di-tert-butylhydroquinone (BHQ), with a certain MDA, N,N'-disalicylidene propylene diamine, acts synergistically to improve the oxidation stability of oils derived from plant or animal materials. This was surprising as the effect observed does not extend to other types of known anti-oxidants where combinations with the same MDA were found not to behave synergistically.

Thus in accordance with a first aspect, the present invention provides a liquid composition comprising a major amount of an oil and a minor amount of an additive composition, wherein the additive composition comprises BHQ and N,N'- disalicylidene propylene diamine, and wherein at least 2% by weight of the oil is derived from a plant or animal material.

In accordance with a second aspect, the present invention provides a method of preventing or retarding the oxidation of a liquid composition comprising at least 2% by weight of an oil derived from a plant or animal material, the method comprising adding to the composition a combination of BHQ and N,N'- disalicylidene propylene diamine.

In accordance with a third aspect, the present invention provides a method of improving the oxidation stability of a liquid composition comprising at least 2% by weight of an oil derived from a plant or animal material and BHQ, the method comprising adding to the composition N,N'- disalicylidene propylene diamine.

In accordance with a fourth aspect, the present invention provides the use of a combination of BHQ and N,N'- disalicylidene propylene diamine to prevent or retard the oxidation of a liquid composition, wherein the liquid composition comprises at least 2% by weight of an oil derived from a plant or animal material.

In accordance with a fifth aspect, the present invention provides the use of N,N'-disalicylidene propylene diamine to improve the oxidation stability of a liquid composition comprising at least 2% by weight of an oil derived from a plant or animal material and BHQ.

As discussed hereinabove, aryl amine species, particularly diaryl amine species and phenolic species are known anti-oxidants for petroleum-derived oils. Also as discussed above, BHT has been suggested to be effective to increase the storage stability of biodiesel (US2004/0139649 A1). The oxidation of hydrocarbon fuels is widely believed to proceed via a free radical mechanism:
(i) The reaction is initiated by the generation of free radicals:

   RH → R• + H•
(ii) The hydrocarbon free radical (R• ) can then react with oxygen to form a peroxide radical, which is then able to react with a further hydrocarbon in a self-perpetuating manner:

   R• + O₂ → ROO•

   ROO• + RH → ROOH + R•
(iii) An anti-oxidant (AH) is able to donate a hydrogen atom to the peroxide radical, a reaction which is more favourable than the reaction of the peroxide radical with a further hydrocarbon:

   ROO• + AH → ROOH + A•

The presence of the aryl group in the anti-oxidant (phenolic or aryl aminic) renders the anti-oxidant radical (A•) which is generated sufficiently stable by resonance such that propagation is halted.

This mechanism has also been widely postulated as the process by which oils derived from natural sources oxidise. The structures of the constituents of such oils are characterised by the presence of greater or lesser amounts of olefinic unsaturation. Hydrogen atoms adjacent to olefinic unsaturation are more easily abstracted and as such the generation of R• in step (i) above is more facile. Oils which contain greater proportions of olefinically unsaturated species and/or species with multiple olefinic unsaturation are thus more prone to oxidation. For example, the relative rates of oxidation for C₁₈ methyl esters has been reported in the increasing order: oleic (C18:1), linoleic (C18:2), linolenic (C18:3).

From a consideration of the accepted mechanism for anti-oxidancy outlined above, it is not clear why N,N'- disalicylidene propylene diamine should have an influence on the effectiveness of BHQ. Furthermore, the same effect is not seen for the combination of N,N'-disalicylidene propylene diamine with BHT despite the close structural similarity between BHT and BHQ.

The various features of the invention, which are applicable to all aspects, will now be described in more detail.

### Oil derived from plant or animal material

Examples of oils derived from animal or vegetable material are rapeseed oil, coriander oil, soyabean oil, cottonseed oil, sunflower oil, castor oil, olive oil, peanut oil, maize oil, almond oil, palm kernel oil, coconut oil, mustard seed oil, jatropha oil, beef tallow and fish oils. Further examples include oils derived from corn, jute, sesame, shea nut, ground nut and linseed oil and may be derived therefrom by methods known in the art. Rapeseed oil, which is a mixture of fatty acids partially esterified with glycerol is available in large quantities and can be obtained in a simple way by pressing from rapeseed. Recycled oils such as used kitchen oils are also suitable.

As alkyl esters of fatty acids, consideration may be given to the following, for example as commercial mixtures: the ethyl, propyl, butyl and especially methyl esters of fatty acids with 12 to 22 carbon atoms, for example of lauric acid, myristic acid, palmitic acid, palmitoleic acid, stearic acid, oleic acid, elaidic acid, petroselic acid, ricinoleic acid, elaeostearic acid, linoleic acid, linolenic acid, eicosanoic acid, gadoleic acid, docosanoic acid or erucic acid, which have an iodine number from 50 to 150, especially 90 to 125. Mixtures with particularly advantageous properties are those which contain mainly, i.e. to at least 50 wt% methyl esters of fatty acids with 16 to 22 carbon atoms and 1, 2 or 3 double bonds. The preferred lower alkyl esters of fatty acids are the methyl esters of oleic acid, linoleic acid, linolenic acid and erucic acid.

Commercial mixtures of the stated kind are obtained for example by cleavage and esterification of animal and vegetable fats and oils by their transesterification with lower aliphatic alcohols. For production of alkyl esters of fatty acids it is advantageous to start from fats and oils which contain low levels of saturated acids, less than 20%, and which have an iodine number of less than 130. Blends of the following esters or oils are suitable, e.g. rapeseed, sunflower, coriander, castor, soyabean, peanut, cotton seed, beef tallow etc. Alkyl esters of fatty acids based on a new variety of rapeseed oil, the fatty acid component of which is derived to more than 80 wt% from unsaturated fatty acids with 18 carbon atoms, are preferred.

Particularly preferred are oils capable of being utilised as biofuels. Biofuels, i.e. fuels derived from animal or vegetable material, are believed to be less damaging to the environment on combustion, and are obtained from a renewable source. It has been reported that on combustion less carbon dioxide is formed by the equivalent quantity of petroleum distillate fuel, e.g. diesel fuel, and very little sulphur dioxide is formed. Certain derivatives of vegetable oil, e.g. those obtained by saponification and re-esterification with a monohydric alkyl alcohol, may be used as a substitute for diesel fuel.

Thus, a biofuel is an oil obtained from vegetable or animal material, or both, or a derivative thereof, capable of being utilised as a fuel.

Whilst many of the above oils may be used as biofuels, preferred are vegetable oil derivatives, of which particularly preferred biofuels are alkyl ester derivatives of rapeseed oil, cottonseed oil, soyabean oil, sunflower oil, olive oil, or palm oil, rapeseed oil methyl ester being especially preferred.

At present, biofuels are most commonly used in combination with petroleum-derived oils. The present invention is applicable to mixtures of biofuel and petroleum-derived fuels in any ratio. For example, at least 5%, preferably at least 25%, more preferably at least 50%, for example at least 95% by weight of the oil may be derived from a plant or animal source.

For the avoidance of doubt, the invention is also applicable to pure biofuels. In one embodiment therefore, the liquid composition comprises essentially 100% by weight of an oil derived from a plant or animal source.

A practical consequence of the present invention is that pure biofuel and fuels with high biofuel contents, which are particularly prone to deterioration through oxidation, can be treated to improve their storage lifetimes. This may be important whether the biofuel is intended to be used essentially pure or whether it is to be blended with petroleum-derived oils following extended storage.

### Treat Rate

BHQ is preferably added to the liquid composition in an amount of from 10 to 1,000ppm by weight based on the weight of the liquid. Preferably, in an amount of from 10 to 500ppm, for example from 10 to 300ppm by weight based on the weight of the liquid.

The ratio of N,N'- disalicylidene propylene diamine to BHQ is preferably in the range from 1:50 to 1:1, more preferably in the range from 1:50 to 1:10, for example in the range from 1:35 to 1:25 based on the weight of BHQ used.

### Prevention or retardation of oxidation

The oxidation stability of liquid compositions comprising oils derived from plant or animal materials may be determined using the Rancimat Test (ISO 6886, pr EN 14112). This method originated in the food industry [see for example: H.Prankl, "Oxidation Stability of fatty acid methyl esters", 10th European Conference on Biomass for Energy and Industry, 8-11 June 1998, Wurzburg]. In the test, samples of liquid are aged at a constant temperature (110°C) whilst air is passed through the liquid at a rate of 10 litres/hour. The exhaust airflow passes through a measuring cell filled with distilled water. The conductivity of the measuring cell is determined continuously and recorded automatically. As the liquid oxidises, volatile organic acids are produced and taken up by the distilled water. This increases the conductivity of the water. The oxidation process is such that there is a gradual increase in measured conductivity followed by a rapid increase. The length of the period prior to the rapid increase, known as the 'induction period' is a measure of the oxidation stability of the liquid under test. The presence of an effective anti-oxidant will lengthen the induction period. The Rancimat Test has been adopted as a specification test in the qualification of biodiesel fuels.

With regard to the methods of the second and third aspects and the uses of the fourth and fifth aspects of the invention, the prevention or retardation of the oxidation or the improvement of the oxidation stability of the liquid composition is preferably as determined using the Rancimat Test (ISO 6886). That is, the prevention or retardation of the oxidation, or the improvement of the oxidation stability of the liquid composition is manifest by an increase in the induction period measured by the Rancimat Test compared to the untreated liquid composition. In the context of the third and fifth aspects, the untreated liquid composition corresponds to the liquid composition comprising an oil derived from a plant or animal material which already contains BHQ.

The invention will now be described by way of example only.

Table 2 below shows the results obtained from Rancimat testing. A biofuel, having the specification shown in Table 1 below, containing 200ppm by weight of a number of commonly used types of anti-oxidants, including BHQ, was tested. The tests were repeated using the same anti-oxidants in combination with 10ppm by weight of MDA. For completeness, tests were also performed using the fuel containing 10ppm by weight of MDA alone. The average of 5 measurements on the Base Fuel alone gave a Rancimat Induction Time of 5.83 hours. Table 2 reports the results as the increase in the Induction Time compared to this Base Fuel value.

**Table 1**

| Iodine value | g I₂ / g biofuel | 66 |
|---|---|---|
| C16:0 | mass % | 4.59 |
| C16:1 | mass % | 0.21 |
| C18:0 | mass % | 1.58 |
| C18:1 | mass % | 56.04 |
| C18:2 | mass % | 19.88 |
| C18:3 | mass % | 10.39 |
| C20:0 | mass % | - |
| Total Saturates | mass % | 6.17 |

**Table 2**

| No. | Additive | Increase in Rancimat Induction Time compared to Base fuel / hours |
|---|---|---|
| 1 | MDA | 0.72 |
| 2 | ascorbyl palmitate | 2.81 |
| 3 | ascorbyl palmitate + MDA | 2.72 |
| 4 | BHT | 2.10 |
| 5 | BHT + MDA | 2.93 |
| 6 | BHQ | 4.28 |
| 7 | BHQ + MDA | 10.72 |

| | | |
|---|---|---|
| MDA-N,N'-disalicylidene propylene diamine BHT - 2,4,-di-tert-butylhydroxytoluene BHQ - 2,5-di-tert-butylhydroquinone | | |

From the results obtained, it can be seen that the MDA has only a marginal effect when used alone (Example No. 1). There is the suggestion of an antagonistic effect for the combination with ascorbyl palmitate (Example Nos. 2 & 3) as the value obtained is less than would be expected by a simple sum of the effects of the two components (0.72 + 2.81 = 3.53). The effect for the combination with BHT (Example Nos. 4 & 5) is very close to what would be expected from a sum of the contributions of the two components (0.72 + 2.10 = 2.82) indicating neither a synergistic nor antagonistic effect. Contrastingly, the effect for the combination according to the invention using BHQ (Example Nos. 6 & 7) shows a pronounced synergistic effect. The value obtained for the combination is more than two times that which would be obtained from a simple sum of the contributions of the two components (0.72 + 4.28 = 5.00 cf. 10.72).

## Claims

1. A liquid composition comprising a major amount of an oil and a minor amount of an additive composition, wherein the additive composition comprises BHQ and N,N'- disalicylidene propylene diamine, and wherein at least 2% by weight of the oil is derived from a plant or animal material.

2. A liquid composition according to any preceding claim wherein at least 5%, preferably at least 25%, more preferably at least 50%, for example at least 95% by weight of the oil is derived from a plant or animal material.

3. A method of preventing or retarding the oxidation of a liquid composition comprising at least 2% by weight of an oil derived from a plant or animal material, the method comprising adding to the composition a combination of BHQ and N,N'- disalicylidene propylene diamine.

4. A method of improving the oxidation stability of a liquid composition comprising at least 2% by weight of an oil derived from a plant or animal material and BHQ, the method comprising adding to the composition N,N'- disalicylidene propylene diamine.

5. A method according to claim 3 or claim 4 wherein the prevention or retardation of the oxidation, or the improvement of the oxidation stability of the liquid composition is as determined using the Rancimat Test (ISO 6886).

6. The use of a combination of BHQ and N,N'- disalicylidene propylene diamine to prevent or retard the oxidation of a liquid composition, wherein the liquid composition comprises at least 2% by weight of an oil derived from a plant or animal material.

7. The use of N,N'- disalicylidene propylene diamine to improve the oxidation stability of a liquid composition comprising at least 2% by weight of an oil derived from a plant or animal material and BHQ.

8. A use according to claim 6 or claim 7 wherein the prevention or retardation of the oxidation, or the improvement of the oxidation stability of the liquid composition is as determined using the Rancimat Test (ISO 6886).
